# EUROPEAN PATENT APPLICATION

(11) **EP 4 607 306 A1**
(43) Date of publication of application: **27.08.2025**
(21) Application number: 25151323.0
(22) Date of filing: 10.01.2025
(51) Int. Cl.: G05B 19/418, G01S 17/931, G08G 1/00, B60W 30/165, G01S 13/86, G01S 13/931

(54) **VEHICLE MANUFACTURING SYSTEM, VEHICLE MANUFACTURING METHOD, AND PROGRAM**

(30) Priority: 21.02.2024 JP 2024024428
(71) Applicant: TOYOTA JIDOSHA KABUSHIKI KAISHA, Aichi-ken, 471-8571 (JP)
(72) Inventor: IWAZAKI, Noritsugu, Aichi-ken, 471-8571 (JP); KANOU, Takeshi, Aichi-ken, 471-8571 (JP); INOUE, Go, Aichi-ken, 471-8571 (JP); OKAMOTO, Yuki, Aichi-ken, 471-8571 (JP); OHARA, Kento, Aichi-ken, 471-8571 (JP); TAKAHASHI, Satoshi, Aichi-ken, 471-8571 (JP)
(74) Representative: D Young & Co LLP

(57) **Abstract**

A vehicle manufacturing system (50) includes: determination means (1125) for determining whether or not a first vehicle (1117) among a plurality of vehicles is equipped with first information acquisition means (1113) for acquiring first information indicating a position and an attitude of a vehicle behind the first vehicle (1117), the plurality of vehicles being manufactured step by step while they are continuously moving; and vehicle repositioning means (1127) for selecting and repositioning a vehicle equipped with second information acquisition means (1115) for acquiring second information indicating a position and an attitude of a vehicle in front thereof as a second vehicle (1119) following the first vehicle (1117) when the determination means (1125) determines that the first vehicle (1117) is not equipped with the first information acquisition means (1113).

## Description

### BACKGROUND

The present disclosure relates to a vehicle manufacturing system, a vehicle manufacturing method, and a program.
Patent Literature 1 discloses that vehicles travel autonomously or under remote control in a manufacturing system for manufacturing vehicles.
Patent Literature 1: Published Japanese Translation of PCT International Publication for Patent Application, No. 2017-538619

### SUMMARY

However, Patent Literature 1 discloses only that vehicles are remotely controlled by using information obtained outside the vehicles. Therefore, an object of the present disclosure is to provide a vehicle manufacturing system capable of, when an information acquisition unit disposed inside a vehicle of interest cannot acquire information on the position and attitude of a vehicle behind the vehicle of interest, selecting and repositioning a vehicle that can acquire information on the position and attitude of a vehicle in front thereof, i.e., the vehicle of interest, as a vehicle following the vehicle of interest.

A vehicle manufacturing system according to the present disclosure includes:
determination means for determining whether or not a first vehicle among a plurality of vehicles is equipped with first information acquisition means for acquiring first information indicating a position and an attitude of a vehicle behind the first vehicle, the plurality of vehicles being manufactured step by step while they are continuously moving; and
vehicle repositioning means for selecting and repositioning a vehicle equipped with second information acquisition means for acquiring second information indicating a position and an attitude of a vehicle in front thereof as a second vehicle following the first vehicle when the determination means determines that the first vehicle is not equipped with the first information acquisition means.

By the above-described configuration, it is possible to provide a vehicle manufacturing system capable of, when an information acquisition unit disposed inside a vehicle of interest cannot acquire information on the position and attitude of a vehicle behind the vehicle of interest, selecting and repositioning a vehicle that can acquire information on the position and attitude of a vehicle in front thereof, i.e., the vehicle of interest, as a vehicle following the vehicle of interest.

In the vehicle manufacturing system according to the present disclosure,
the first information acquisition means is a photographing apparatus, a LiDAR, a radar, a GPS, or an ultrasonic sensor,
the second information acquisition means is a photographing apparatus, a LiDAR, a radar, a GPS, or an ultrasonic sensor,
the first information is an image or a distance, and
the second information is an image or a distance.

The above-described configuration is an example of the first information acquisition means, the second information acquisition means, the first information, and the second information.

In the vehicle manufacturing system according to the present disclosure, the determination means determines whether or not the vehicle of interest is equipped with the first information acquisition means by using production information or internal information of the vehicle of interest.

The above-described configuration is an example of the determination method.

In the vehicle manufacturing system according to the present disclosure, when the determination means determines that the first vehicle is equipped with the first information acquisition means, the vehicle repositioning means selects and repositions a vehicle that is not equipped with the second information acquisition means as the second vehicle following the first vehicle.

By the above-described configuration, it is possible to manufacture a vehicle that is not equipped with second information acquisition means based on information obtained from other vehicles.

In the vehicle manufacturing system according to the present disclosure, an order of the first and second vehicles is restored to a production order after a manufacturing process is completed.

By the above-described configuration, the order can be rearranged only during the manufacturing of vehicles.

In the vehicle manufacturing system according to the present disclosure, third information acquired from the outside of the first and second vehicles is used when the order is restored to the production order.

By the above-described configuration, the order of vehicles that are not equipped with the information acquisition means can be rearranged.

A method for manufacturing vehicles according to the present disclosure includes:
determining whether or not a first vehicle among a plurality of vehicles is equipped with first information acquisition means for acquiring first information indicating a position and an attitude of a vehicle behind the first vehicle, the plurality of vehicles being manufactured step by step while they are continuously moving; and
selecting and repositioning a vehicle equipped with second information acquisition means for acquiring second information indicating a position and an attitude of a vehicle in front thereof as a second vehicle following the first vehicle when it is determined that the first vehicle is not equipped with the first information acquisition means.

By the above-described configuration, it is possible to provide a method for manufacturing vehicles in which when a vehicle of interest is not equipped with a first information acquisition unit configured to acquire information on the position and attitude of a vehicle behind the vehicle of interest, a vehicle that can acquire information on the position and attitude of a vehicle in front thereof, i.e., the vehicle of interest, is selected and repositioned as a vehicle following the vehicle of interest.

A program according to the present disclosure causes an information processing apparatus to:
determine whether or not a first vehicle among a plurality of vehicles is equipped with first information acquisition means for acquiring first information indicating a position and an attitude of a vehicle behind the first vehicle, the plurality of vehicles being manufactured step by step while they are continuously moving; and
select and reposition a vehicle equipped with second information acquisition means for acquiring second information indicating a position and an attitude of a vehicle in front thereof as a second vehicle following the first vehicle when it is determined that the first vehicle is not equipped with the first information acquisition means.

By the above-described configuration, it is possible to provide program for causing an information processing apparatus to, when a vehicle of interest is not equipped with a first information acquisition unit configured to acquire information on the position and attitude of a vehicle behind the vehicle of interest, select and reposition a vehicle that can acquire information on the position and attitude of a vehicle in front thereof, i.e., the vehicle of interest, as a vehicle following the vehicle of interest.

According to the present disclosure, it is possible to provide a vehicle manufacturing system and the like capable of, when an information acquisition unit disposed inside a vehicle of interest cannot acquire information on the position and attitude of a vehicle behind the vehicle of interest, selecting and repositioning a vehicle that can acquire information on the position and attitude of a vehicle in front thereof, i.e., the vehicle of interest, as a vehicle following the vehicle of interest.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing an overview 1 of a vehicle manufacturing system according to an embodiment;
Fig. 2 is a schematic diagram showing an overview 2 of a vehicle manufacturing system according to an embodiment;
Fig. 3 is a block diagram showing a configuration of a vehicle manufacturing system according to an embodiment;
Fig. 4 is a flowchart 1 of a vehicle manufacturing method according to an embodiment;
Fig. 5 is a flowchart 2 of a vehicle manufacturing method according to an embodiment;
Fig. 6 is a diagram for explaining control of the traveling of a vehicle;
Fig. 7 is a control block diagram for explaining Travel Control Example 1;
Fig. 8 is a flowchart for explaining Travel Control Example 1;
Fig. 9 is a control block diagram for explaining Travel Control Example 2; and
Fig. 10 is a flowchart for explaining Travel Control Example 2.

### DESCRIPTION OF EMBODIMENTS

### Embodiments

Embodiments according to the present disclosure will be described hereinafter with reference to the drawings. However, the invention specified in the claims is not limited to the below-shown embodiments. Further, all the components/structures described in the embodiments are not necessarily indispensable as means for solving the problem. For clarifying the explanation, the following description and drawings are partially omitted and simplified as appropriate. The same reference numerals (or symbols) are assigned to the same elements throughout the drawings and redundant descriptions thereof are omitted as appropriate.

### (Description of Overview of Vehicle Manufacturing System according to Embodiment)

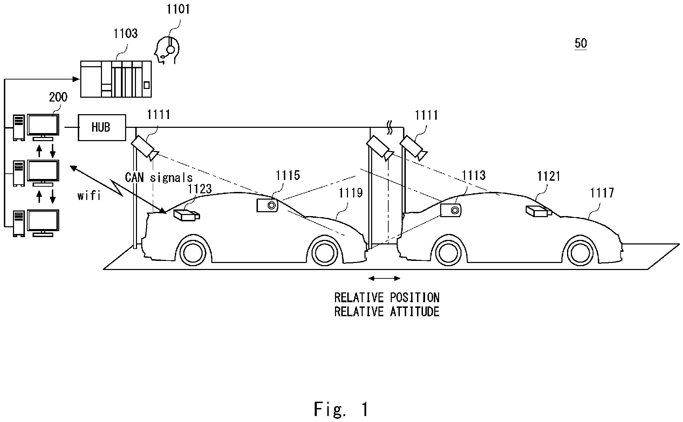

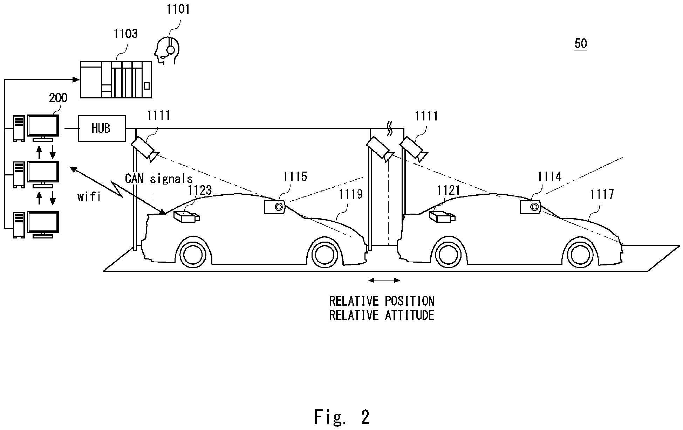

Fig. 1 is a schematic diagram showing an overview 1 of a vehicle manufacturing system according to an embodiment. Fig. 2 is a schematic diagram showing an overview 2 of a vehicle manufacturing system according to an embodiment. An overview of a vehicle manufacturing system 50 according to an embodiment will be described with reference to Figs. 1 and 2. The vehicle manufacturing system 50 is used in a vehicle manufacturing factory.

As shown in Fig. 1, the vehicle manufacturing system 50 includes a server 200, a third information acquisition unit 1111, a first information acquisition unit 1113, a second information acquisition unit 1115, a first vehicle 1117, a second vehicle 1119, and radio communication terminals 1121 and 1123. A manager 1101 and a production management system 1103 are present outside the vehicle manufacturing system.

The manager 1101 is a person who works in the factory. For example, the manager 1101 is a manager or an operator for the production management system 1103 or a process performed therein. The manager 1101 manages the vehicle manufacturing system 50.

The production management system 1103 is a manufacturing execution system, and is a system for monitoring and managing equipment in the factory and work performed therein by workers by linking with each part of the production line of the factory. The production management system 1103 acquires information from BOP (Bill Of Process) / BOE (Bill Of Equipment). Further, the production management system 1103 also includes a production instruction database for providing information about instructions in regard to the production to the vehicle manufacturing system. The instructions in regard to the production are instructions for people and equipment, such as instructions in regard to parts to be used or procedures to be followed, in addition to types and specifications of individual products according to a production plan.

The first and second vehicles 1117 and 1119 are a plurality of vehicles which are manufactured step by step while they are continuously moving. Hereinafter, the first and second vehicles 1117 and 1119 are also referred to as vehicles 100. The vehicle 100, i.e., each of vehicles 100, includes an ECU (Electronic Control Unit), and also includes a battery and a motor mounted on the body of the vehicle. Further, tires are attached to the vehicle, so that the vehicle can autonomously travel.

More specifically, the vehicle 100 is a battery electric vehicle (BEV: Battery Electric Vehicle). Note that the vehicle 100 is not limited to electric vehicles, and may be, for example, an electric motorcycle, an electric bicycle, an electric kickboard, a hybrid vehicle, or a fuel cell vehicle. Further, the vehicle 100 may be a vehicle equipped with wheels or endless tracks, e.g., caterpillars, and may be, for example, a passenger car, a truck, a bus, a two-wheeled vehicle, a four-wheeled vehicle, a tank, a construction vehicle, or any of other types of vehicles. Further, the vehicle 100 is not limited to vehicles, and may be an electric vertical takeoff and landing aircraft (so-called a flying car). The vehicle 100 becomes a completed vehicle step by step as parts are assembled into the vehicle 100 while it is traveling by itself.

For the vehicle 100, first information indicating its position and attitude (e.g., orientation and the like) is acquired by the third information acquisition unit 1111, so that the vehicle 100 moves while being controlled by the server 200. For the third information acquisition unit 1111, for example, a LiDAR (Light Detection And Ranging) or a photographing apparatus can be used. The photographing apparatus may be an RGB camera, an RGBD camera, an infrared camera, or the like. Further, the third information acquisition unit 1111 may be a radar, a GPS (Global Positioning System), or an ultrasonic sensor. The third information is an image or a distance. The third information acquisition unit 1111 acquires a distance to the vehicle 100 and an image thereof, and the server 200 calculates a relative position and a relative attitude of the vehicle 100. The server 200 may perform an image analysis by using AI (Artificial Intelligence) in order to acquire the position and attitude of the vehicle from the image. The position indicates a distance between the vehicle and another vehicle, and the attitude indicates the orientation or steering angle of the vehicle.

The first information acquisition unit 1113 is provided in the first vehicle 1117. The first information acquisition unit 1113 acquires first information indicating the position and attitude of the vehicle behind the vehicle of interest, i.e., the vehicle in which the first information acquisition unit 1113 is provided. The first information acquisition unit 1113 is, for example, a radar or a photographing apparatus. The first information acquisition unit 1113 may be a LiDAR, a GPS, or an ultrasonic sensor. The first information is an image or a distance. The first information acquisition unit 1113 acquires a distance to the vehicle behind the first vehicle 1117 and an image thereof, and the server 200 calculates relative positions and relative attitudes of these vehicles in front and behind. The server 200 may perform an image analysis by using AI (Artificial Intelligence) in order to acquire the position and attitude of the vehicle from the image.

The second information acquisition unit 1115 is provided in the second vehicle 1119. The second information acquisition unit 1115 acquires second information indicating the position and attitude of the vehicle in front of the vehicle of interest in which the second information acquisition unit 1115 is provided. The second information acquisition unit 1115 is, for example, a radar or a photographing apparatus. The second information acquisition unit 1115 may be a LiDAR, a GPS, or an ultrasonic sensor. The second information is an image or a distance. The second information acquisition unit 1115 acquires a distance to the vehicle in front of the second vehicle 1119 and an image thereof, and the server 200 calculates relative positions and relative attitudes of these vehicles in front and behind. The server 200 may perform an image analysis by using AI (Artificial Intelligence) in order to acquire the position and attitude of the vehicle from the image.

The radio communication terminal 1121 is provided in the first vehicle 1117. The radio communication terminal 1123 is provided in the second vehicle 1119. The radio communication terminal 1121 transmits the first information acquired by the first information acquisition unit 1113 of the first vehicle 1117 to the server 200 through CAN (Controller Area Network) communication. Similarly, the radio communication terminal 1123 transmits the second information acquired by the second information acquisition unit 1115 of the second vehicle 1119 to the server 200 through CAN communication.

Here, it is assumed that the third information acquisition unit 1111 cannot acquire the positions and attitudes of a plurality of vehicles for some reason. In this case, the first and second information acquisition units 1113 and 1115 acquire the relative positions and relative attitudes of the plurality of vehicles. However, as shown in Fig. 2, there is a case where although the first vehicle 1117 is equipped with a fourth information acquisition unit 1114 for acquiring fourth information, which is information on the vehicle in front of the first vehicle 1117, the first information acquisition unit 1113 has not been mounted thereon. Alternatively, there is a case where the first information acquisition unit 1113 is not provided in the first vehicle 1117 according to its specifications. In such a case, since the first vehicle 1117 cannot acquire the position and attitude of the vehicle following the first vehicle 1117, it is necessary to select the second vehicle 1119 following the first vehicle 1117.

The server 200 is an information processing apparatus including a memory and a processor, and functions as a vehicle manufacturing control apparatus for controlling the vehicle manufacturing system. For example, the server 200 receives the results of detection by the third information acquisition unit 1111, the first information acquisition unit 1113, and the second information acquisition unit 1115. The server 200 controls the vehicles according to the detection results and the like. The server 200 may be composed of one apparatus or a plurality of apparatuses. The server 200 may be a cloud server that processes some or all of its functions in a distributed manner.

The server 200 processes, for example, signals received from the third information acquisition unit 1111. The server 200 acquires positions and attitudes of a plurality of vehicles 100 including the first and second vehicles 1117 and 1119 by using the third information acquired from the third information acquisition unit 1111.

The server 200 processes, for example, signals received from the first and second information acquisition units 1113 and 1115. The server 200 acquires positions and attitudes of a plurality of vehicles 100 including the first and second vehicles 1117 and 1119 by using the first and second information acquired from the first and second information acquisition units 1113 and 1115.

The server 200 determines whether or not the first vehicle is equipped with the first information acquisition unit 1113. When the server 200 determines that the first vehicle is not equipped with the first information acquisition unit 1113, the server 200 selects and repositions a vehicle equipped with the second information acquisition unit 1115 for acquiring second information indicating the position and attitude of the vehicle in front of the vehicle equipped with said unit 1115 as a second vehicle following the first vehicle. By the above-described configuration, it is possible to provide a vehicle manufacturing system capable of, when an information acquisition unit disposed inside a vehicle of interest cannot acquire information on the position and attitude of a vehicle behind the vehicle of interest, selecting and repositioning a vehicle that can acquire information on the position and attitude of a vehicle in front thereof, i.e., the vehicle of interest, as a vehicle following the vehicle of interest.

The server 200 determines whether or not the vehicle of interest is equipped with the first information acquisition unit 1113 by using production information or internal information of the production management system 1103.

When the server 200 determines that the first vehicle 1117 is equipped with the first information acquisition unit 1113, it may select and reposition a vehicle that is not equipped with the second information acquisition unit 1115 as the second vehicle 1119 following the first vehicle 1117. By the above-described configuration, it is possible to manufacture a vehicle that is not equipped with the second information acquisition unit 1115 based on information obtained from other vehicles.

The server 200 restores the order of the first and second vehicles 1117 and 1119 to the production order, i.e., the order in which the first and second vehicles 1117 and 1119 are manufactured, after the manufacturing process is completed. By the above-described configuration, the order can be rearranged only during the manufacturing of vehicles.

When the server 200 restores the order to the production order, it uses third information acquired from the outside of the first and second vehicles 1117 and 1119. By the above-described configuration, the order of a vehicle that is not equipped with an information acquisition unit can be rearranged.

The third information acquisition unit 1111, the first information acquisition unit 1113, the second information acquisition unit 1115, and the fourth information acquisition unit 1114 may also referred to as the first information acquisition means, the second information acquisition means, the third information acquisition means, and the fourth information acquisition means, respectively.

### (Description of Configuration of Vehicle Manufacturing System according to Embodiment)

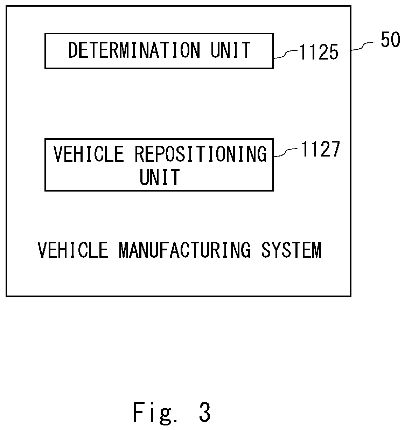

Fig. 3 is a block diagram showing a configuration of a vehicle manufacturing system according to an embodiment. The configuration of the vehicle manufacturing system according to the embodiment will be described with reference to Fig. 3.

As shown in Fig. 3, the vehicle manufacturing system 50 includes a determination unit 1125 and a vehicle repositioning unit 1127. The determination unit 1125 and the vehicle repositioning unit 1127 are a part of the function of the server 200.

The determination unit 1125 determines whether or not a first vehicle among a plurality of vehicles is equipped with a first information acquisition unit 1113 for acquiring first information indicating the position and attitude of a vehicle behind the first vehicle. There is a case where the first information acquisition unit 1113 has not yet been mounted on the first vehicle 1117 or is not mounted thereon according to its specifications. The first information acquisition unit 1113 acquires first information indicating the position and attitude of the vehicle behind the first vehicle 1117. The first information acquisition unit 1113 can acquire a distance to the vehicle behind the vehicle of interest, i.e., the vehicle in which the first information acquisition unit 1113 is provided, and a steering-angle direction thereof.

When the determination unit 1125 determines that the first vehicle 1117 is not equipped with the first information acquisition unit 1113, the vehicle repositioning unit 1127 selects and repositions a vehicle equipped with a second information acquisition unit 1115 for acquiring second information indicating the position and attitude of a vehicle in front thereof as a second vehicle 1119 following the first vehicle 1117. The second information acquisition unit 1115 is provided in the second vehicle 1119 behind the first vehicle 1117 and acquires second information indicating the position and attitude of the first vehicle 1117 in front of the second vehicle 1119. The second information acquisition unit 1115 can acquire a distance to the first vehicle 1117 in front of the second vehicle 1119 and a steering-angle direction thereof.

The determination unit 1125 and the vehicle repositioning unit 1127 may also be referred to as determination means and vehicle repositioning means, respectively.

By the above-described configuration, it is possible to provide a vehicle manufacturing system capable of, when an information acquisition unit disposed inside a vehicle of interest cannot acquire information on the position and attitude of a vehicle behind the vehicle of interest, selecting and repositioning a vehicle that can acquire information on the position and attitude of a vehicle in front thereof, i.e., the vehicle of interest, as a vehicle following the vehicle of interest.

### (Description of Vehicle Manufacturing Method 1 according to Embodiment)

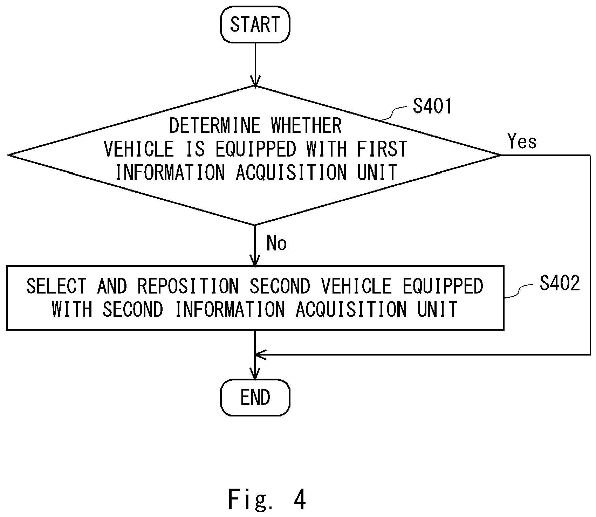

Fig. 4 is a flowchart 1 of a vehicle manufacturing method according to an embodiment. The vehicle manufacturing method 1 according to the embodiment will be described with reference to Fig. 4.

As shown in Fig. 4, the determination unit 1125 determines whether or not the vehicle of interest is equipped with the first information acquisition unit 1113 (Step S401). The determination unit 1125 determines whether or not a first vehicle among a plurality of vehicles, which are manufactured step by step while they are continuously moving, is equipped with the first information acquisition unit 1113 for acquiring first information indicating the position and attitude of the vehicle behind the first vehicle.

Next, when it is determined that the first vehicle is not equipped with the first information acquisition unit (No in Step S401), the vehicle repositioning unit 1127 selects and repositions a second vehicle 1119 equipped with a second information acquisition unit 1115 (Step S402). When the determination unit 1125 determines that the first vehicle 1117 is not equipped with the first information acquisition unit 1113, the vehicle repositioning unit 1127 selects and repositions a vehicle equipped with the second information acquisition unit 1115 for acquiring second information indicating the position and attitude of a vehicle in front thereof as the second vehicle following the first vehicle 1117.

Next, when the first vehicle is equipped with the first information acquisition unit (Yes in Step S401), the series of processes are finished. This is because since information on the vehicle behind the first vehicle can be acquired, any type of vehicle can follow the first vehicle as the second vehicle.

By the above-described configuration, it is possible to provide a method for manufacturing vehicles in which when an information acquisition unit disposed inside a vehicle of interest cannot acquire information on the position and attitude of a vehicle behind the vehicle of interest, a vehicle that can acquire information on the position and attitude of a vehicle in front thereof, i.e., the vehicle of interest, is selected as repositioned as a vehicle following the vehicle of interest.

### (Description of Vehicle Manufacturing Method 2 according to Embodiment)

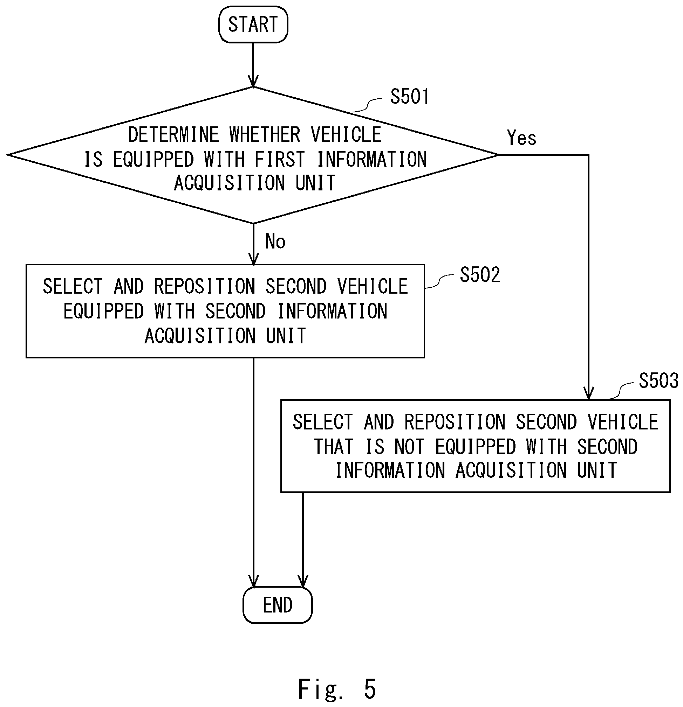

Fig. 5 is a flowchart 2 of a vehicle manufacturing method according to an embodiment. The vehicle manufacturing method 2 according to the embodiment will be described with reference to Fig. 5.

As shown in Fig. 5, first, the determination unit 1125 determines whether or not the vehicle of interest is equipped with the first information acquisition unit (Step S501). When the vehicle of interest is not equipped with the first information acquisition unit 1113 (No in Step S501), a second vehicle equipped with the second information acquisition unit 1115 is selected and repositioned (Step S502).

When the vehicle of interest is equipped with the first information acquisition unit 1113 (Yes in Step S501), a second vehicle 1119 that is not equipped with the second information acquisition unit 1115 is selected and repositioned (Step S503). When the determination unit 1125 determines the first vehicle 1117 is equipped with the first information acquisition unit 1113, the vehicle repositioning unit 1127 selects and repositions a vehicle that is not equipped with the second information acquisition unit 1115 as the second vehicle 1119 following the first vehicle 1117.

By the above-described configuration, it is possible to manufacture a vehicle that is not equipped with second information acquisition means based on information obtained from other vehicles.

### <A. Traveling Control Example 1>

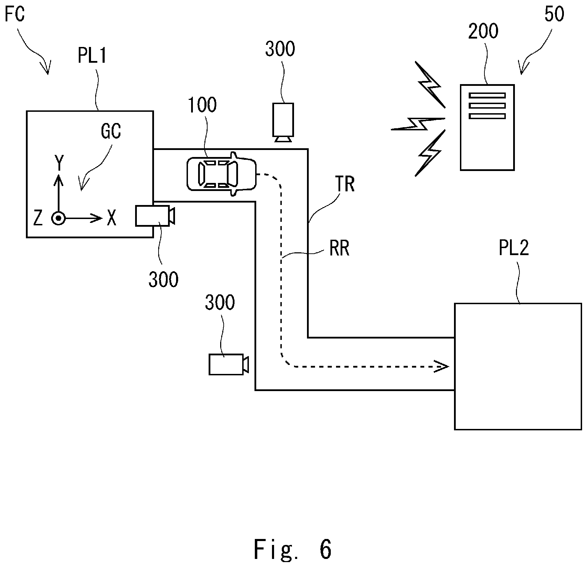

Fig. 6 is a conceptual diagram showing a configuration of a system 50 in Traveling Control Example 1. The system 50 includes at least one vehicle 100 as a mobile object, a server 200, and at least one external sensor 300.

Note that when the mobile object is an object other than the vehicle, each of the terms "vehicle" and "car" in the present disclosure can be replaced with a "mobile object" as appropriate, and the term "traveling" can be replaced with a "movement" as appropriate.

The vehicle 100 is configured to be able to travel by an unattended operation. The "unattended operation" means an operation (e.g., driving) that does not rely on a traveling operation performed by an occupant (e.g., a driver). The traveling operation means an operation related to at least one of "running", "turning", and "stopping" of the vehicle 100. The unattended operation is carried out by automatic or manual remote control using an apparatus located outside the vehicle 100, or by autonomous control of the vehicle 100. An occupant (e.g., a driver or a passenger) who does not perform a traveling operation may be on board the vehicle 100 which is traveling by an unattended operation. Examples of occupants who do not perform a traveling operation include a person simply sitting on a seat of the vehicle 100 and a person who performs an operation other than the traveling operation, such as assembling, inspecting, and operating switches while being on board the vehicle 100. Note that the operation (e.g., driving) by a traveling operation performed by an occupant may be referred to as a "manned operation (or piloted operation)".

In this specification, the "remote control" includes "full remote control" in which all the operations of the vehicle 100 are completely determined from the outside of the vehicle 100, and "partial remote control" in which some of the operations of the vehicle 100 are determined from the outside of the vehicle 100. Further, the "autonomous control" includes "full autonomous control" in which the vehicle 100 autonomously controls its own operations without receiving any information from an apparatus located outside the vehicle 100, and "partial autonomous control" in which the vehicle 100 autonomously controls its own operations by using information received from an apparatus located outside the vehicle 100.

In this embodiment, the system 50 is used in a factory FC in which vehicles 100 are manufactured. The reference coordinate system of the factory FC is a global coordinate system GC. That is, any position in the factory FC is represented by X, Y and Z-coordinates in the global coordinate system GC. The factory FC includes a first place PL1 and a second place PL2. The first and second places PL1 and PL2 are connected to each other by a track TR (e.g., passageway) on which a vehicle 100 can travel. The factory FC includes a plurality of external sensors 300 along the track TR. The positions of the external sensors 300 in the factory FC are adjusted in advance. The vehicle 100 moves from the first place PL1 to the second place PL2 through the track TR by an unattended operation.

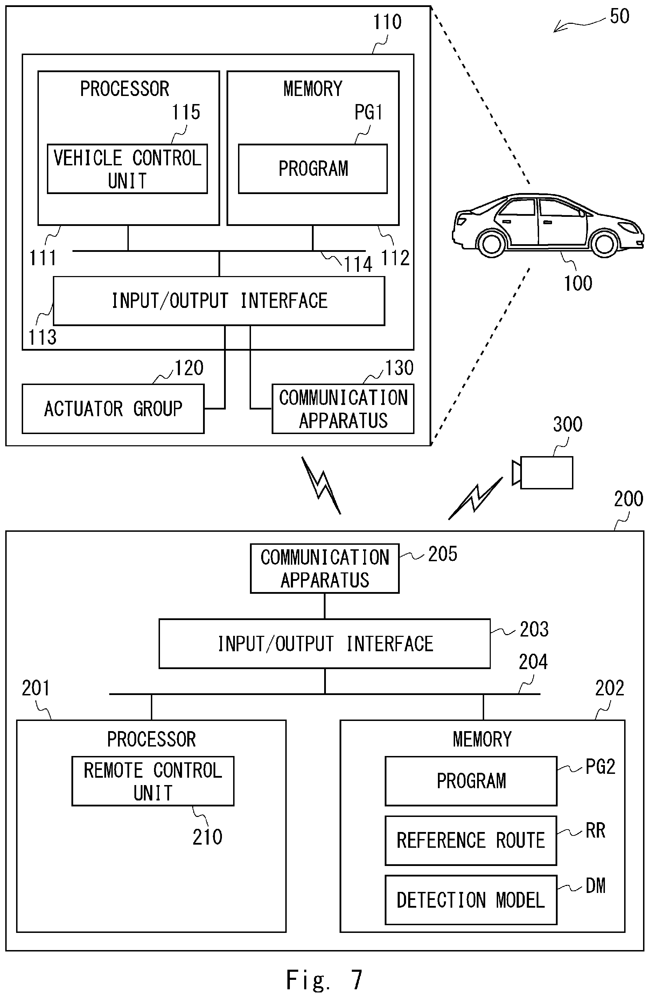

Fig. 7 is a block diagram showing a configuration of the system 50. The vehicle 100 includes a vehicle control apparatus 110 for controlling various units of the vehicle 100, an actuator group 120 including at least one actuator driven under the control of the vehicle control apparatus 110, and a communication apparatus 130 for communicating with an external apparatus such as the server 200 through wireless communication. The actuator group 120 includes an actuator of a driving unit for accelerating the vehicle 100, an actuator of a steering unit for changing the traveling direction of the vehicle 100, and an actuator of a braking unit for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to each other through the internal bus 114 so that they can bidirectionally communicate with each other. The actuator group 120 and the communication apparatus 130 are connected to the input/output interface 113. The processor 111 implements various functions including the function as the vehicle control unit 115 by executing a program PG1 stored in the memory 112.

The vehicle control unit 115 drives the vehicle 100 by controlling the actuator group 120. The vehicle control unit 115 can drive the vehicle 100 by controlling the actuator group 120 by using a driving control signal received from the server 200. The driving control signal is a control signal for driving the vehicle 100. In this embodiment, the driving control signal includes an acceleration and a steering angle of the vehicle 100 as parameters. In other embodiments, the driving control signal may include a speed of the vehicle 100 as a parameter instead of or in addition to the acceleration of the vehicle 100.

The server 200 is composed of a computer including a processor 201, a memory 202, an input/output interface 203, and an internal bus 204. The processor 201, the memory 202, and the input/output interface 203 are connected through the internal bus 204 so that they can bidirectionally communicate with each other. A communication apparatus 205 for communicating with various apparatuses located outside the server 200 is connected to the input/output interface 203. The communication apparatus 205 can communicate with the vehicle 100 through wireless communication, and can communicate with each of the external sensors 300 through wired communication or wireless communication. The processor 201 implements various functions including the function as the remote-control unit 210 by executing a program PG2 stored in the memory 202.

The remote-control unit 210 acquires a detection result obtained by a sensor, generates a driving control signal for controlling the actuator group 120 of the vehicle 100 by using the detection result, and transmits the generated driving control signal to the vehicle 100. In this way, the remote-control unit 210 drives the vehicle 100 by remote control. The remote-control unit 210 may generate and output, in addition to the driving control signal, control signals for controlling various auxiliary apparatuses provided in the vehicle 100 and actuators for operating various types of equipment such as wipers, power windows, and lamps. That is, the remote-control unit 210 may operate these various types of equipment and various auxiliary apparatuses by remote control.

The external sensor 300 is a sensor located outside the vehicle 100. The external sensor 300 in this embodiment is a sensor for capturing (e.g., finding and keeping track of) the vehicle 100 from outside the vehicle 100. The external sensor 300 includes a communication apparatus (not shown) and can communicate with other apparatuses such as the server 200 through wired communication or wireless communication.

Specifically, the external sensor 300 is formed by a camera (e.g., a still camera or a video camera). A camera, which functions as the external sensor 300, takes an image (e.g., a still image or a moving image) including (i.e., showing therein) the vehicle 100 and outputs the taken image as a detection result.

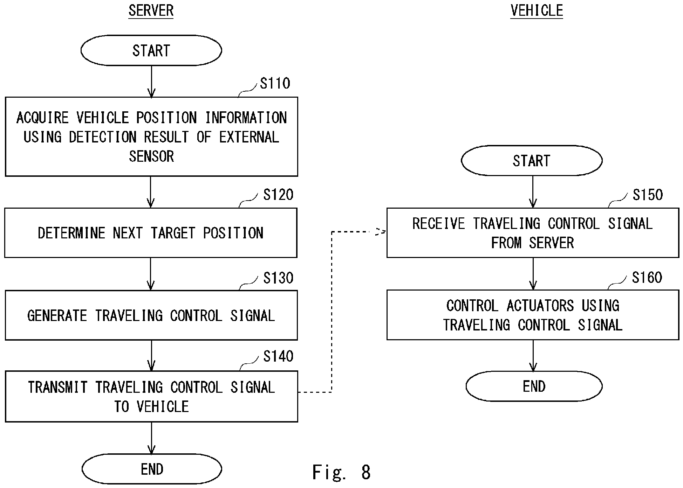

Fig. 8 shows a flowchart showing a procedure of processes for controlling the traveling of a vehicle 100 in a traveling control example. In the procedure of processes shown in Fig. 8, the processor 201 of the server 200 functions as the remote-control unit 210 by executing the program PG2. Further, the processor 111 of the vehicle 100 functions as the vehicle control unit 115 by executing the program PG1.

In a step S110, the processor 201 of the server 200 acquires vehicle position information of the vehicle 100 by using a detection result output from the external sensor 300. The vehicle position information is position information based on which a driving control signal is generated. In this embodiment, the vehicle position information includes the position and orientation of the vehicle 100 in the global coordinate system GC of the factory FC. Specifically, in a step S110, the processor 201 acquires vehicle position information by using the photographed image acquired from the camera serving as the external sensor 300.

Specifically, in the step S110, the processor 201 acquires the position of the vehicle 100 by, for example, detecting the external shape of the vehicle 100 from the photographed image, calculating the coordinates of the positioning point of the vehicle 100 in the coordinate system of the photographed image, i.e., in the local coordinate system, and converting the calculated coordinates into coordinates in the global coordinate system GC. The external shape of the vehicle 100 included (i.e., shown) in the photographed image can be detected by, for example, inputting the photographed image into a detection model DM using artificial intelligence. The detection model DM is prepared, for example, in the system 50 or outside the system 50, and stored in the memory 202 of the server 200 in advance. Examples of the detection model DM include a trained machine-learning model that has been trained to perform either semantic segmentation or instance segmentation. As this machine-learning model, for example, a convolutional neural network (hereinafter also referred to as a CNN) trained through supervised learning using a learning data set can be used. The learning data set includes, for example, a plurality of training images each including the vehicle 100 and labels each indicating whether a respective area in the training image is an area indicating the vehicle 100 or an area that does not indicate a mobile object. When the CNN is trained, it is preferred that parameters of the CNN are updated by backpropagation (error backpropagation method) so that errors between output results by the detection model DM and labels are reduced. Further, the processor 201 can acquire the orientation of the vehicle 100 by, for example, estimating it based on the orientation of the moving vector of the vehicle 100 calculated from changes in the positions of the feature points of the vehicle 100 between frames of the photographed images by using an optical flow method.

In a step S120, the processor 201 of the server 200 determines a target position to which the vehicle 100 should go next. In this embodiment, the target position is represented by X, Y and Z-coordinates in the global coordinate system GC. In the memory 202 of the server 200, a reference route RR, which is a route along which the vehicle 100 should travel, is stored in advance. A route is represented by a node indicating a starting point, a node(s) indicating a passing point(s), a node indicating a destination, and links connecting these nodes with one another. The processor 201 determines a target position to which the vehicle 100 should go next by using the vehicle position information and the reference route RR. The processor 201 determines the target position of the vehicle 100 ahead of the current position thereof on the reference route RR.

In a step S130, the processor 201 of the server 200 generates a driving control signal for driving the vehicle 100 toward the determined target position. The processor 201 calculates the traveling speed of the vehicle 100 based on the changes in the position of the vehicle 100, and compares the calculated traveling speed with the target speed. When the traveling speed is lower than the target speed, the processor 201 determines, as a whole, the acceleration of the vehicle 100 so that the vehicle 100 accelerates, whereas when the traveling speed is higher than the target speed, the processor 201 determines the acceleration so that the vehicle 100 decelerates. Further, when the vehicle 100 is positioned on the reference route RR, the processor 201 determines the steering angle and the acceleration of the vehicle 100 so that the vehicle 100 does not deviate from the reference route RR, whereas when the vehicle 100 is not positioned on the reference route RR, i.e., the vehicle 100 has deviated from the reference route RR, the processor 201 determines the steering angle and the acceleration so that the vehicle 100 returns to the reference route RR.

In a step S140, the processor 201 of the server 200 transmits the generated driving control signal to the vehicle 100. The processor 201 repeats the acquisition of the position of the vehicle 100, the determination of a target position, the generation of a driving control signal, the transmission of the driving control signal, and the like in a predetermined cycle.

In a step S150, the processor 111 of the vehicle 100 receives the driving control signal transmitted from the server 200. In a step S160, the processor 111 of the vehicle 100 controls the actuator group 120 by using the received driving control signal, and thereby drives the vehicle 100 so as to travel at the acceleration and the steering angle indicated by the driving control signal. The processor 111 repeats the reception of a driving control signal and the control of the actuator group 120 at a predetermined cycle. According to the system 50 in this example, it is possible to drive the vehicle 100 by remote control, and thereby move the vehicle 100 without using conveyance equipment such as a crane or a conveyor.

### <B: Traveling Control Example 2>

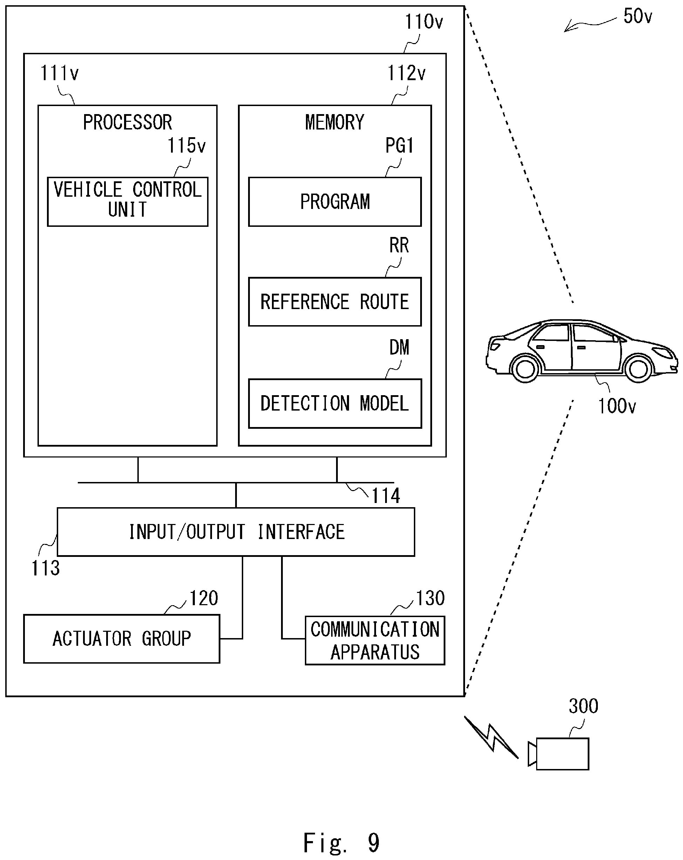

Fig. 9 is an explanatory diagram showing a schematic configuration of a system 50v in Traveling Control Example 2. This example differs from Traveling Control Example 1 because the system 50v does not includes the server 200. Further, a vehicle 100v in the configuration can travel by autonomous control performed by the vehicle 100v itself. The rest of the configuration is the same as that described above unless otherwise specified.

In this example, a processor 111v of a vehicle control apparatus 110v functions as a vehicle control unit 115v by executing a program PG1 stored in a memory 112v. The vehicle control unit 115v acquires an output result obtained by a sensor, generates a driving control signal by using the output result, and outputs the generated driving control signal and thereby operates the actuator group 120. By doing so, the vehicle control unit 115v can make the vehicle 100v travel by autonomous control performed by the vehicle 100 itself. In this example, in addition to the program PG1, a detection model DM and a reference route RR are stored in the memory 112v in advance.

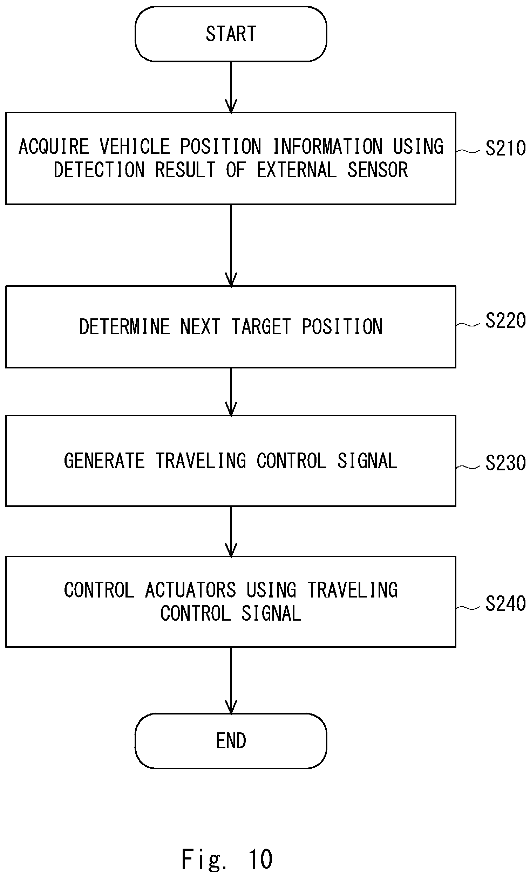

Fig. 10 shows a flowchart showing a procedure of processes for controlling the traveling of the vehicle 100v in Traveling Control Example 2. In the processing procedure shown in Fig. 10, the processor 111v of the vehicle 100v functions as the vehicle control unit 115v by executing the program PG1.

In a step S210, the processor 111v of the vehicle control apparatus 110v acquires vehicle position information by using a detection result output from a camera which is an external sensor 300. In a step S220, the processor 111v determines a target position to which the vehicle 100v should go next. In a step S230, the processor 111v generates a driving control signal for making the vehicle 100v travel toward the determined target position. In a step S240, the processor 111v controls the actuator group 120 by using the generated driving control signal, and thereby makes the vehicle 100v travel according to parameters indicated by the driving control signal. The processor 111v repeats the acquisition of vehicle position information, the determination of a target position, the generation of a driving control signal, and the control of actuators in a predetermined cycle. According to the system 50v in this example, it is possible to make the vehicle 100v travel by autonomous control performed by the vehicle 100v itself without having the server 200 remotely control the vehicle 100v.

### YY: Other Traveling Control Examples

(YY1) In the above-described examples, the external sensor 300 is a camera. However, the external sensor 300 may not be a camera and may be, for example, LiDAR (Light Detection And Ranging). In this case, the detection result output from the external sensor 300 may be 3D (three-dimensional) point cloud data representing the vehicle 100. In this case, the server 200 and the vehicle 100 may acquire vehicle position information by template matching between the 3D point cloud data, which is the detection result, and reference point cloud data prepared in advance.

(YY2) In Traveling Control Example 1, a series of processes from the acquisition of vehicle position information to the generation of a driving control signal are performed by the server 200. However, at least some of the processes from the acquisition of vehicle position information to the generation of a driving control signal may be performed by the vehicle 100. For example, the below-shown Embodiments (1) to (3) may be adopted.
(1) The server 200 may acquire vehicle position information, determine a target position to which the vehicle 100 should go next, and generate a route from the current position of the vehicle 100 indicated by the acquired vehicle position information to the target position. The server 200 may generate a route to a target position which is located between the current position and the destination, or generate a route to the destination. The server 200 may transmit the generated route to the vehicle 100. The vehicle 100 may generate a driving control signal so as to travel along the route received from the server 200, and control the actuator group 120 by using the generated driving control signal.
(2) The server 200 may acquire vehicle position information and transmit the acquired vehicle position information to the vehicle 100. The vehicle 100 may determine a target position to which the vehicle 100 should go next, generate a route from the current position of the vehicle 100 indicated by the received vehicle position information to the target position, generate a driving control signal so as to travel along the generated route, and control the actuator group 120 by using the generated driving control signal.
(3) In the above-described Embodiments (1) and (2), the vehicle 100 may be equipped with an internal sensor, and a detection result output from the internal sensor may be used for at least either the generation of a route or the generation of a driving control signal. The internal sensor is a sensor provided in the vehicle 100. Examples of internal sensors may include a sensor for detecting the motion state of the vehicle 100, a sensor for detecting the operation state of each unit of the vehicle 100, and a sensor for detecting the environment around the vehicle 100. Specifically, examples of internal sensors include a camera, LiDAR, a millimeter-wave radar, an ultrasonic sensor, a GPS sensor, an acceleration sensor, and a gyro sensor. For example, in the above-described Embodiment (1), the server 200 may acquire a detection result obtained by the internal sensor, and when generating a route, take the detection result of the internal sensor into consideration in the generation of the route. In the above-described Embodiment (1), the vehicle 100 may acquire a detection result obtained by the internal sensor, and when generating a driving control signal, take the detection result of the internal sensor into consideration in the generation of the driving control signal. In the above-described Embodiment (2), the vehicle 100 may acquire a detection result obtained by the internal sensor, and when generating a route, take the detection result of the internal sensor into consideration in the generation of the route. In the above-described Embodiment (2), the vehicle 100 may acquire a detection result obtained by the internal sensor, and when generating a driving control signal, take the detection result of the internal sensor into consideration in the generation of the driving control signal.

(YY3) In Traveling Control Example 2, the vehicle 100v may be equipped with an internal sensor, and a detection result output from the internal sensor may be used for at least either the generation of a route or the generation of a driving control signal. For example, the vehicle 100v may acquire a detection result obtained by the internal sensor, and when generating a route, take the detection result of the internal sensor into consideration in the generation of the route. The vehicle 100v may acquire a detection result obtained by the internal sensor, and when generating a driving control signal, take the detection result of the internal sensor into consideration in the generation of the driving control signal.

(YY4) In Traveling Control Example 2, the vehicle 100v acquires vehicle position information by using a detection result obtained by an external sensor 300. However, the vehicle 100v may be equipped with an internal sensor, and the vehicle 100v may acquire vehicle position information by using the detection result of the internal sensor, determine a target position to which the vehicle 100v should go next, generate a route from the current position of the vehicle 100v indicated by the acquired vehicle position information to the target position, generate a driving control signal for traveling along the generated route, and control the actuator group 120 by using the generated driving control signal. In this case, the vehicle 100v can travel without using the detection result of the external sensor 300 at all. Note that the vehicle 100v may acquire a target arrival time and traffic congestion information from outside the vehicle 100v and take the target arrival time and traffic congestion information into consideration in at least either the generation of a route or the generation of a driving control signal. Further, all the functions of the system 50v may be provided in the vehicle 100v. That is, the whole processing implemented by the system 50v according to the present disclosure may be implemented by the vehicle 100v alone.

(YY5) In Traveling Control Example 1, the server 200 automatically generates a driving control signal to be transmitted to the vehicle 100. However, the server 200 may generate a driving control signal to be transmitted to the vehicle 100 according to an operation performed by an operator who is present outside the vehicle 100. For example, an operator present outside the vehicle 100 may operate a controlling apparatus including a display for displaying a photographed image output from an external sensor 300, a steering wheel, an accelerator pedal, and a brake pedal for remotely controlling the vehicle 100, and a communication apparatus for communicating with the server 200 through wired communication or wireless communication. Then, the server 200 may generate a driving control signal according to operations performed on the controlling apparatus.

(YY6) In each of the above-described traveling control examples, it is sufficient if the vehicle 100 has a configuration capable of moving the vehicle 100 by an unattended operation. For example, the vehicle 100 may be in the form of a platform including the below-described configuration. Specifically, it is sufficient if the vehicle 100 includes at least a vehicle control apparatus 110 and an actuator group 120 in order to perform three functions of "running", "turning", and "stopping" by an unattended operation. In the case where the vehicle 100 acquires information from the outside the vehicle 100 in order to perform an unattended operation, it is sufficient if the vehicle 100 further includes a communication apparatus 130. That is, the vehicle 100 capable of moving by an unattended operation may not include at least some of interior components such as a driver's seat and a dashboard, may not include at least some of exterior components such as a bumper and a fender, and may not include a body shell. In this case, the remaining components such as a body shell may be attached to the vehicle 100 until the vehicle 100 is shipped from the factory FC. Alternatively, the vehicle 100 may be shipped from the factory FC without the remaining components such as a body shell, and then these remaining components such as a body shell may be attached to the vehicle 100 after the shipment. These components may be attached from arbitrary directions such as from above, from below, from front, from rear, from the right side, or from the left side of the vehicle 100. Further, they may be attached from the same direction or from different directions. Note that in the case of being formed as a platform, its position may be determined in the same manner as the position of the vehicle 100 is determined in the first embodiment.

(YY7) The vehicle 100 may be manufactured by combining a plurality of modules with each other. The module means a unit composed of a plurality of components that are assembled according to the place in the vehicle 100 at which the module is used and/or according to the function in the vehicle 100. For example, the platform of the vehicle 100 may be manufactured by combining a front module constituting the front part of the platform, a center module constituting the central part of the platform, and a rear module constituting the rear part of the platform with each other. Note that the number of modules constituting the platform is not limited to three, but may be two or less, or four or more. Further, in addition to or instead of the components constituting the platform, components constituting a part of the vehicle 100 other than the platform may be assembled into a module. Further, they include various modules including optional exterior components such as a bumper and a grill, and optional interior components such as a seat and a console. Further, what is manufactured is not limited to the vehicle 100. That is, any type of mobile object may be manufactured by combining a plurality of modules with each other. Such modules may be manufactured, for example, by joining a plurality of components by welding or by using fixtures, or may be manufactured by integrally molding at least some of the components constituting the module into one component by casting. A molding method for integrally molding one component, particularly a relatively large component, may also be called giga-casting or mega-casting. For example, the aforementioned front module, the center module, and the rear module may be manufactured by giga-casting.

(YY8) The conveyance of a vehicle 100 that is carried out by making the vehicle 100 travel by an unattended operation is also called "self-propelled conveyance". Further, the configuration for carrying out self-propelled conveyance is also called a "vehicle remote control autonomous traveling conveyance system". Further, the production method for producing vehicles 100 by using self-propelled conveyance is also called "self-propelled production". In the self-propelled production, for example, at least some of the conveyance of vehicles 100 is carried out by self-propelled conveyance in the factory FC in which vehicles 100 are manufactured.

(YY9) In each of the above-described traveling control examples, some or all of the functions and processes implemented by software may be implemented by hardware. Further, some or all of the functions and processes implemented by hardware may be implemented by software. As the hardware for implementing various functions in each of the above-described embodiments, various circuits such as integrated circuits and/or discrete circuits may be used.

Further, some or all of the processes performed in the above-described external sensor 300, the vehicle 100, the server 200, and the like can be implemented in the form of a computer program. Such a program can be stored and provided to the computer by using any type of non-transitory computer readable media. Non-temporary computer readable media include various types of substantial recording media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, a CD-R/W, and a semiconductor memory (such as a mask ROM, a PROM (Programmable ROM), an EPROM (Erasable PROM), a flash ROM, and a RAM (Random Access Memory)). Further, the program may be supplied to the computer by various types of temporary computer readable media. Examples of transitory computer readable media include electric signals, optical signals, and electromagnetic waves. Temporary computer readable media can provide programs to computers through wired or wireless communication channels such as wires and optical fibers.

Note that the present invention is not limited to the above-described example embodiments, and they can be modified as appropriate without departing from the scope and spirit of the invention.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle manufacturing system (50) comprising:
determination means (1125) for determining whether or not a first vehicle (1117) among a plurality of vehicles is equipped with first information acquisition means (1113) for acquiring first information indicating a position and an attitude of a vehicle behind the first vehicle (1117), the plurality of vehicles being manufactured step by step while they are continuously moving; and
vehicle repositioning means (1127) for selecting and repositioning a vehicle equipped with second information acquisition means (1115) for acquiring second information indicating a position and an attitude of a vehicle in front thereof as a second vehicle (1119) following the first vehicle (1117) when the determination means (1125) determines that the first vehicle (1117) is not equipped with the first information acquisition means (1113).

2. The vehicle manufacturing system (50) according to claim 1, wherein
the first information acquisition means (1113) is a photographing apparatus, a LiDAR, a radar, a GPS, or an ultrasonic sensor,
the second information acquisition means (1115) is a photographing apparatus, a LiDAR, a radar, a GPS, or an ultrasonic sensor,
the first information is an image or a distance, and
the second information is an image or a distance.

3. The vehicle manufacturing system (50) according to claim 1, wherein the determination means (1125) determines whether or not the vehicle of interest is equipped with the first information acquisition means (1113) by using production information or internal information of the vehicle of interest.

4. The vehicle manufacturing system (50) according to claim 1, wherein when the determination means (1125) determines that the first vehicle (1117) is equipped with the first information acquisition means(1113), the vehicle repositioning means (1127) selects and repositions a vehicle that is not equipped with the second information acquisition means (1115) as the second vehicle (1119) following the first vehicle (1117).

5. The vehicle manufacturing system according to claim 1, wherein an order of the first and second vehicles (1117, 1119) is restored to a production order after a manufacturing process is completed.

6. The vehicle manufacturing system according to claim 5, wherein third information acquired from the outside of the first and second vehicles is used when the order is restored to the production order.

7. A method for manufacturing vehicles, comprising:
determining whether or not a first vehicle (1117) among a plurality of vehicles is equipped with first information acquisition means (1113) for acquiring first information indicating a position and an attitude of a vehicle behind the first vehicle, the plurality of vehicles being manufactured step by step while they are continuously moving; and
selecting and repositioning a vehicle equipped with second information acquisition means (1115) for acquiring second information indicating a position and an attitude of a vehicle in front thereof as a second vehicle (1119) following the first vehicle (1117) when it is determined that the first vehicle (1117) is not equipped with the first information acquisition means (1113).

8. A program for causing an information processing apparatus to:
determine whether or not a first vehicle (1117) among a plurality of vehicles is equipped with first information acquisition means (1113) for acquiring first information indicating a position and an attitude of a vehicle behind the first vehicle (1117), the plurality of vehicles being manufactured step by step while they are continuously moving; and
select and reposition a vehicle equipped with second information acquisition means (1115) for acquiring second information indicating a position and an attitude of a vehicle in front thereof as a second vehicle (1119) following the first vehicle (1117) when it is determined that the first vehicle (1117) is not equipped with the first information acquisition means (1113).
